# EUROPÄISCHE PATENTSCHRIFT

(11) **EP 2 593 661 B1**
(45) Veröffentlichungstag und Bekanntmachung des Hinweises auf die Patenterteilung: **10.08.2016**
(21) Anmeldenummer: 11723082.1
(22) Anmeldetag: 06.06.2011
(51) Int. Cl.: F02M 65/00

(54) **PRÜFSTAND FÜR FLUIDPUMPEN UND FLUIDINJEKTOREN**
TEST BENCH FOR FLUID PUMPS AND FLUID INJECTORS
BANC D'ESSAI POUR POMPES À FLUIDE ET INJECTEURS DE FLUIDE

(30) Priorität: 16.07.2010 DE 102010031486
(43) Veröffentlichungstag der Anmeldung: 22.05.2013
(73) Patentinhaber: Robert Bosch GmbH, 70442 Stuttgart (DE)
(72) Erfinder: SCHOENFELD, Dirk, 73776 Altbach (DE); KASTNER, Karl, 73061 Ebersbach (DE); BLANK, Kurt, 73061 Ebersbach (DE)
(86) Internationale Anmeldenummer: PCT/EP2011/059266
(87) Internationale Veröffentlichungsnummer: WO 2012/007227

(56) Entgegenhaltungen:
- DE-A1- 19 618 869
- DE-A1-102006 013 634
- GB-A- 1 135 234
- US-B1- 6 755 076

## Beschreibung

Die Erfindung betrifft einen Prüfstand für Fluidpumpen und Fluidinjektoren, insbesondere Kraftstoffpumpen und Kraftstoffinjektoren, mit einer Vorrichtung zum Kühlen eines Fluidstromes und ein Verfahren zum Kühlen eines Fluidstromes in einem Prüfstand für Fluidpumpe und Fluidinjektoren.

### Stand der Technik

Beim Prüfen von Fluidpumpen, insbesondere Kraftstoffhochdruckpumpen, und Fluidinjektoren (Kraftstoffinjektoren), wie sie z.B. in Dieselmotoren eingesetzt werden, in einem Prüfstand erwärmt sich das zum Prüfen verwendete Einspritzfluid (Prüföl) und es ist notwendig, das Einspritzfluid zu kühlen, um diese Erwärmung zu kompensieren. Dafür sind verschiedene Methoden bekannt.

In einem bekannten Verfahren wird dem Prüfstand Leitungswasser zugeführt, welches Wärme von dem Einspritzfluid aufnimmt und dieses dadurch kühlt. Das erwärmte Wasser wird anschließend dem Abwasser zugeführt.

In einem alternativen Verfahren wird das Einspritzfluid durch einen Luftkühler gekühlt und die Wärme an die Umgebungsluft abgegeben.

### Offenbarung der Erfindung

Eine Aufgabe der Erfindung ist es, eine Vorrichtung und ein Verfahren bereitzustellen, welche eine verbesserte Kühlung des in einem Prüfstand für Fluidpumpen und Fluidinjektoren verwendeten Einspritzfluids ermöglichen.

Ein erfindungsgemäßer Prüfstand zum Prüfen von Fluidpumpen und Fluidinjektoren hat eine Fluidpumpen-Aufnahmevorrichtung, die zur Aufnahme einer zu prüfenden Fluidpumpe ausgebildet ist, eine Fluidinjektor-Aufnahmevorrichtung, die zur Aufnahme eines zu prüfenden Fluidinjektors ausgebildet ist, und eine Fluidleitung, welche die Fluidpumpen-Aufnahmevorrichtung derart hydraulisch mit der Fluidinjektor-Aufnahmevorrichtung verbindet, dass im Betrieb ein Fluidstrom von der Fluidpumpe zum Fluidinjektor möglich ist. Weiterhin weist ein erfindungsgemäßer Prüfstand einen geschlossenen Kühlkreis, durch den im Betrieb ein fluides Kühlmittel zirkuliert, und einen ersten Wärmetauscher auf, der so ausgebildet und in der Fluidleitung angeordnet ist, dass er im Betrieb von dem Fluidstrom in der Fluidleitung und dem im Kühlkreis zirkulierenden Kühlmittel derart durchströmt wird, dass eine Wärmeübertragung zwischen dem Fluid und dem Kühlmittel möglich ist.

In einem erfindungsgemäßen Verfahren zum Kühlen eines Fluids in einem Prüfstand für Fluidpumpen und Fluidinjektoren zirkuliert ein fluides Kühlmittel durch einen geschlossenen Kühlkreis. Der zu kühlende Fluidstrom und das zirkulierende Kühlmittel werden derart durch einen ersten Wärmetauscher geführt, dass eine Wärmeübertragung zwischen dem Fluid und dem Kühlmittel erfolgt.

Die Verwendung eines fluiden Kühlmittels ermöglicht eine hohe Kühlleistung, insbesondere eine höhere Kühlleistung als sie durch eine Luftkühlung möglich ist.

Dadurch, dass der Kühlkreis geschlossen ist, sind das erfindungsgemäße Verfahren und ein erfindungsgemäßer Prüfstand umweltfreundlich und kostengünstig betreibbar, da das Kühlmittel wiederholt verwendet und nicht verbraucht wird. Darüber hinaus sind ein erfindungsgemäßes Verfahren und ein erfindungsgemäßer Prüfstand unabhängig von einem Wasseranschluss betreibbar, so dass die Einsatzmöglichkeiten des Prüfstandes erweitert werden.

In einer Ausführungsform ist der geschlossene Kühlkreis mit einer externen Wasserkühlung kombiniert. Die externe Wasserkühlung ist bei Spitzenbelastung, d.h. hohem Kühlbedarf, zuschaltbar, um den geschlossenen Kühlkreis zu unterstützen. Der geschlossene Kühlkreis kann so kleiner und kostengünstiger dimensioniert werden, da er nicht ausgebildet sein muss, um auch bei Spitzenbelastung eine ausreichende Kühlung bereitstellen zu können.

In einer Ausführungsform eines erfindungsgemäßen Prüfstandes ist im Kühlkreis ein zweiter Wärmetauscher angeordnet, der geeignet ist, Wärme aus dem Kühlmittel abzuführen. Durch einen zweiten Wärmetauscher kann das Kühlmittel effektiv gekühlt werden, um Wärme aus dem Kühlkreis abzuführen.

In einer Ausführungsform ist das Kühlmittel flüssig. Ein flüssiges Kühlmittel ist einfach zu handhaben und ermöglicht eine gute und gleichmäßige Kühlung des Einspritzfluids.

In einer Ausführungsform enthält das Kühlmittel Wasser. Wasser ist ein billiges und effizientes Kühlmittel, welches bei Bedarf einfach nachgefüllt und unproblematisch entsorgt werden kann.

In einer Ausführungsform ist der Kühlkreis mit einem Kaltwassersatz ausgestattet. Ein handelsüblicher Kaltwassersatz ermöglicht ein einfaches, effizientes und kostengünstiges Kühlen des Kühlmittels.

In einer Ausführungsform weist der Prüfstand wenigstens einen Fluid-Temperatursensor auf, der ausgebildet ist, um die Temperatur des Einspritzfluids zu messen. Insbesondere kann wenigstens ein Fluid-Temperatursensor stromaufwärts und/oder stromabwärts des ersten Wärmetauschers angeordnet sein, um die Temperatur des Einspritzfluids vor und/oder nach dem Durchströmen des ersten Wärmetauschers zu messen. Durch einen solchen Fluid-Temperatursensor kann die Temperatur des Einspritzfluids effektiv überwacht werden.

In einer Ausführungsform ist im Kühlkreis zusätzlich wenigstens ein Kühlmittel-Temperatursensor vorgesehen, um die Temperatur des Kühlmittels zu messen.

In einer Ausführungsform ist in dem Kühlkreis wenigstens ein Ventil angeordnet, das ausgebildet ist, um den Kühlmittelstrom durch den Kühlkreis zu regeln.

In einer Ausführungsform ist eine Steuerung vorgesehen, die elektrisch mit dem Ventil verbunden und ausgebildet ist, um den Kühlmittelstrom im Kühlkreis durch Ansteuern des Ventils zu regeln.

Vorzugsweise ist die Steuerung mit wenigstens einem Fluid- und/oder Kühlmittel-Temperatursensor verbunden, um den Kühlmittelstrom in Abhängigkeit von der Temperatur des Einspritzfluids und/oder des Kühlmittels zu regeln.

Durch eine solche Steuerung ist die Temperatur des Einspritzfluids auf einen für den jeweiligen Prüfvorgang gewünschten Wert einstellbar. Dadurch kann die Genauigkeit und Reproduzierbarkeit der Ergebnisse des Prüfvorgangs verbessert werden.

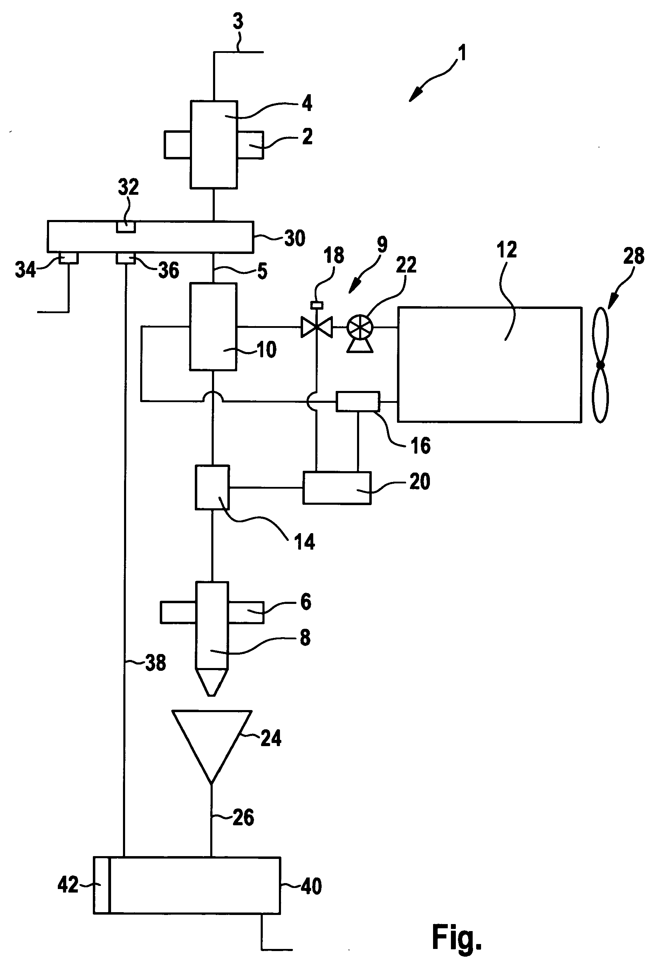

Die Erfindung wird im Folgenden anhand der beigefügten Figur näher erläutert.

Die Figur zeigt eine schematische Ansicht eines erfindungsgemäßen Prüfstandes, der zum Prüfen von Fluidpumpen und Fluidinjektoren ausgebildet ist.

Ein erfindungsgemäßer Prüfstand 1 weist eine Fluidpumpen-Aufnahmevorrichtung 2 auf, die zur Aufnahme einer zu prüfenden Fluidpumpe 4 ausgebildet ist.

Weiterhin weist ein erfindungsgemäßer Prüfstand eine Fluidinjektor-Aufnahmevorrichtung 6 auf, die zur Aufnahme eines zu prüfenden Fluidinjektors 8 ausgebildet ist.

Die Fluidpumpen-Aufnahmevorrichtung 2 und die Fluidinjektor-Aufnahmevorrichtung 6 sind derart ausgebildet, dass eine zu prüfende Fluidpumpe 4 und ein zu prüfender Fluidinjektor 8 durch einen Druckspeicher 30 und eine Fluidleitung 5 hydraulisch miteinander verbunden sind, wenn sich im Betriebszustand (Prüfzustand) eine Fluidpumpe 4 in der Fluidpumpen-Aufnahmevorrichtung 2 und ein Fluidinjektor 8 in der Fluidinjektor-Aufnahmevorrichtung 6 befinden.

Zum Prüfen der Fluidpumpe 4 und/oder des Fluidinjektors 8 wird die Fluidpumpe 4 von einer in der Figur nicht gezeigten Steuerung derart angesteuert, dass sie Einspritzfluid aus einer Fluidzuleitung 3, die mit einem in der Figur nicht gezeigten Tank verbunden ist, unter erhöhtem Druck in den Druckspeicher 30 fördert.

Der Fluiddruck im Druckspeicher 30 ist durch wenigstens einen im Druckspeicher 30 angeordneten Drucksensor 32 messbar und kann durch Ansteuern eines

Druckeinstellventils 34, durch welches überschüssiges Fluid aus dem Druckspeicher 30 in den nicht gezeigten Tank 10 rückführbar ist, mit hoher Genauigkeit auf den gewünschten Wert eingestellt werden.

Der Druckspeicher 30 ist über die Fluidleitung 5 hydraulisch mit dem zu prüfenden Fluidinjektor 8 verbunden, um dem Fluidinjektor 8 im Betrieb unter Druck stehendes Fluid zuzuführen.

Das von dem Fluidinjektor 8 im (Prüf-)Betrieb ausgegebene Fluid wird von einer Auffangvorrichtung 24 aufgefangen und über eine Rücklaufleitung 26, in der eine zur Messung der durch die Rücklaufleitung 26 strömenden Fluidmenge ausgebildete Fluidmesseinheit 40 angeordnet ist, in den nicht gezeigten Tank zurückgeführt. Die Fluidmesseinheit 40 ist mit einer Auswert- und Anzeigeeinheit 42 verbunden, die ausgebildet ist, um die von der Fluidmesseinheit 40 gemessene Fluidmenge auszuwerten und anzuzeigen bzw. an ein Diagnosegerät zu übertragen.

Der Druckspeicher 30 ist zusätzlich über eine Bypass-Leitung 38, die durch ein Bypass-Ventil 36 verschließbar ist, hydraulisch mit der Fluidmesseinheit 40 verbunden. Zum Prüfen des Fluidinjektors 8 ist das Bypass-Ventil 36 geschlossen. Um die Fluidpumpe 4 zu prüfen, wird das Bypass-Ventil 36 geöffnet und der Fluidinjektor 8 wird nicht angesteuert, so dass die Fluidmesseinheit 40 die durch die Fluidpumpe 4 geförderte Fluidmenge misst.

In der Fluidleitung 5 ist zwischen der Fluidpumpe 4 und dem Fluidinjektor 8 ein erster Wärmetauscher 10 derart angeordnet, dass er von dem Einspritzfluid in der Fluidleitung 5 durchströmt wird.

Der Prüfstand 1 weist einen geschlossenen Kühlkreis 9 mit einem zweiten Wärmetauscher 12 auf. Der Kühlkreis 9 ist derart ausgebildet, dass im Betrieb des Kühlkreises 9 ein Kühlmittel derart durch den Kühlkreis 9 und insbesondere durch den ersten Wärmetauscher 10 strömt, dass eine Wärmeübertragung von dem durch die Fluidleitung strömenden Einspritzfluid an das durch den Kühlkreis 9 strömende Kühlmittel erfolgt. Im Betrieb nimmt das durch den Kühlkreis 9 strömende Kühlmittel Wärme von dem Einspritzfluid, welches durch die Fluidleitung 5 strömt, auf, und die Temperatur des Einspritzfluids in der Fluidleitung 5 wird reduziert.

Das Kühlmittel im Kühlkreis 9 strömt durch einen zweiten Wärmetauscher 12, der beispielsweise Teil eines Kaltwassersatzes ist, und gibt dort die aufgenommene Wärme ab. Im Kühlkreis 9 ist zusätzlich eine Kühlmittelpumpe 22 vorgesehen, welche die Strömung des Kühlmittels durch den Kühlkreis 9 unterstützt. Der Kühlkreis 9 ist vorzugsweise vollständig geschlossen, so dass im Betrieb kein Kühlmittel verbraucht wird. Das Kühlmittel enthält vorzugsweise Wasser, welches ein effektives, kostengünstiges und leicht zu beschaffendes Kühlmittel ist und unproblematisch entsorgt werden kann.

Bei Bedarf können auch andere fluide Kühlmittel verwendet werden. Insbesondere können Kühlmittel mit einer höheren Wärmekapazität und/oder einem höheren Siedepunkt als Wasser verwendet werden. Alternativ oder zusätzlich kann der Kühlkreis 9 druckdicht abgeschlossen sein, um den Siedepunkt des Kühlmittels zu erhöhen.

Im Kühlkreis 9 sind ein Kühlmittel-Temperatursensor 16 und ein Kühlmittel-Ventil 18 vorgesehen, um die Temperatur des Kühlmittels im Kühlkreis 9 zu messen bzw. die Strömung des Kühlmittels durch den Kühlkreis 9 zu regulieren.

In der Fluidleitung 5 ist stromabwärts des ersten Wärmetauschers 10 ein Fluid-Temperatursensor 14 vorgesehen, um die Temperatur des Einspritzfluids in der Fluidleitung 5 stromabwärts des ersten Wärmetauschers 10, d.h. zwischen dem ersten Wärmetauscher 10 und dem Fluidinjektor 8, zu messen. Alternativ oder zusätzlich kann ein Fluid-Temperatursensor 14 stromaufwärts des ersten Wärmetauschers 10 zwischen der Fluidpumpe 4 und dem ersten Wärmetauscher 10 angeordnet sein, um die Temperatur des Einspritzfluids vor dem Eintritt in den ersten Wärmetauscher 10 zu messen.

Der Fluid-Temperatursensor 14, der Kühlmittel-Temperatursensor 16 und das Kühlmittel-Ventil 18 sind elektrisch mit einer Steuerung 20 verbunden. Die Steuerung 20 ist ausgebildet, um das Kühlmittel-Ventil 18 und ggf. die Kühlmittelpumpe 22 in Abhängigkeit der von den Temperatursensoren 14, 16 gemessenen Temperaturen und einer vorgegebenen Zieltemperatur, welche das Einspritzfluid beim Eintritt in den Fluidinjektor 8 haben soll, zu messen.

Die Temperatur des Einspritzfluids in der Fluidleitung 5 kann so durch Ansteuern des Kühlmittel-Ventils 18 und ggf. der Kühlmittelpumpe 22 auf einen für den jeweiligen Prüfvorgang gewünschten Wert eingestellt werden. Die Genauigkeit und Reproduzierbarkeit der Ergebnisse des Prüfvorgangs kann so verbessert werden. Insbesondere kann durch geeignetes Ansteuern des Kühlmittel-Ventils 18 und ggf. der Kühlmittelpumpe 22 eine konstante Temperatur des Einspritzfluids eingestellt werden.

In einem nicht gezeigten Ausführungsbeispiel kann die Steuerung zusätzlich auch auf den zweiten Wärmetauscher 12 einwirken, um die Temperatur des Kühlmittels im Kühlkreis 9 zu regeln. Es kann ein Ventilator 28 vorgesehen sein, welcher einen Luftstrom durch den zweiten Wärmetauscher 12 erzeugt, und die Steuerung 20 kann derart mit dem Ventilator 28 verbunden sein, dass sie den Luftstrom durch den zweiten Wärmetauscher 12 regelt. Alternativ oder zusätzlich können verstellbare Klappen vorgesehen sein, die durch die Steuerung 20 ansteuerbar sind, um den Luftstrom durch den zweiten Wärmetauscher 12 zu regulieren. Der Bereich, in dem die Temperatur des Einspritzfluid einstellbar ist, kann so erweitert werden.

## Patentansprüche

1. Prüfstand (1) zum Prüfen einer Fluidpumpe (4) und/oder eines Fluidinjektors (8) mit
einer Fluidpumpen-Aufnahmevorrichtung (2), die zur Aufnahme einer Fluidpumpe (4) ausgebildet ist;
einer Fluidinjektor-Aufnahmevorrichtung (6), die zur Aufnahme eines Fluidinjektors (8) ausgebildet ist;
einer Fluidleitung (5), welche die Fluidpumpen-Aufnahmevorrichtung (2) hydraulisch mit der Fluidinjektor-Aufnahmevorrichtung (6) verbindet und im Betrieb einen Fluidstrom eines Einspritzfluids von der Fluidpumpe (4) zum Fluidinjektor (8) ermöglicht;
einem geschlossenen Kühlkreis (9), durch den im Betrieb ein Kühlmittel zirkuliert; und
einem ersten Wärmetauscher (10), der so ausgebildet und in der Fluidleitung (5) angeordnet ist, dass er im Betrieb von dem Fluidstrom des Einspritzfluids und dem Kühlmittel derart durchströmt wird, dass eine Wärmeübertragung zwischen dem Fluid und dem Kühlmittel erfolgt.

2. Prüfstand (1) nach Anspruch 1, wobei im Kühlkreis (9) ein zweiter Wärmetauscher (12) vorgesehen ist, um Wärme aus dem Kühlmittel abzuführen.

3. Prüfstand (1) nach Anspruch 1 oder 2, wobei das Kühlmittel flüssig ist und insbesondere Wasser enthält.

4. Prüfstand (1) nach Anspruch 3, wobei der Kühlkreis (9) mit einem Kaltwassersatz ausgestattet ist.

5. Prüfstand (1) nach einem der vorangehenden Ansprüche, der zusätzlich wenigstens einen Fluid-Temperatursensor (14) aufweist, der ausgebildet ist, um die Temperatur des Fluidstroms zu messen.

6. Prüfstand (1) nach Anspruch 5, wobei wenigstens ein Fluid-Temperatursensor (14) stromaufwärts und/oder stromabwärts des ersten Wärmetauschers (10) angeordnet ist.

7. Prüfstand (1) nach einem der vorangehenden Ansprüche, der zusätzlich wenigstens einen Kühlmittel-Temperatursensor (16) aufweist, der ausgebildet ist, um die Temperatur des Kühlmittels im Kühlkreis (9) zu messen.

8. Prüfstand (1) nach einem der vorangehenden Ansprüche mit einem Kühlmittel-Ventil (18), das im Kühlkreis (9) angeordnet und ausgebildet ist, um den Kühlmittelstrom im Kühlkreis (9) zu regeln.

9. Prüfstand (1) nach Anspruch 8, mit einer Steuerung (20), die mit dem Kühlmittel-Ventil (18) verbunden und ausgebildet ist, um den Kühlmittelstrom im Kühlkreis (9) durch Ansteuern des Kühlmittel-Ventils (18) zu regeln.

10. Verfahren zum Kühlen eines Einspritzfluids in einem Prüfstand (1) für eine Fluidpumpe (4) und/oder einen Fluidinjektor (8), mit einem Wärmetauscher (10) in einer Fluidleitung (5), welche die Fluidpumpe (4) und den Fluidinjektor (8) Verbindet, wobei Kühlmittel durch einen geschlossenen Kühlkreis (8) zirkuliert und das zu kühlende Einspritzfluid und das zirkulierende Kühlmittel derart durch den Wärmetauscher (10) strömen, dass eine Wärmeübertragung zwischen dem Fluidstrom und dem Kühlmittel erfolgt.

## Claims

1. Test stand (1) for the testing of a fluid pump (4) and/or of a fluid injector (8), having
a fluid pump holding device (2) which is designed for holding a fluid pump (4);
a fluid injector holding device (6) which is designed for holding a fluid injector (8);
a fluid line (5) which hydraulically connects the fluid pump holding device (2) to the fluid injector holding device (6) and which, during operation, permits a fluid flow of an injection fluid from the fluid pump (4) to the fluid injector (8);
a closed cooling circuit (9) through which a coolant circulates during operation; and
a first heat exchanger (10) which is designed, and arranged in the fluid line (5), such that, during operation, said first heat exchanger is flowed through by the fluid flow of the injection fluid and by the coolant, in such a way that a heat transfer takes place between the fluid and the coolant.

2. Test stand (1) according to Claim 1, wherein, in the cooling circuit (9), there is provided a second heat exchanger (12) for dissipating heat from the coolant.

3. Test stand (1) according to Claim 1 or 2, wherein the coolant is liquid and, in particular, contains water.

4. Test stand (1) according to Claim 3, wherein the cooling circuit (9) is equipped with a water chiller unit.

5. Test stand (1) according to one of the preceding claims, which test stand additionally has at least one fluid temperature sensor (14) designed for measuring the temperature of the fluid flow.

6. Test stand (1) according to Claim 5, wherein at least one fluid temperature sensor (14) is arranged upstream and/or downstream of the first heat exchanger (10).

7. Test stand (1) according to one of the preceding claims, which test stand additionally has at least one coolant temperature sensor (16) designed for measuring the temperature of the coolant in the cooling circuit (9).

8. Test stand (1) according to one of the preceding claims, having a coolant valve (18) which is arranged in the cooling circuit (9) and is designed to regulate the coolant flow in the cooling circuit (9).

9. Test stand (1) according to Claim 8, having a controller (20) which is connected to the coolant valve (18) and is designed to regulate the coolant flow in the cooling circuit (9) by actuation of the coolant valve (18).

10. Method for cooling an injection fluid in a test stand (1) for a fluid pump (4) and/or a fluid injector (8), having a heat exchanger (10) in a fluid line (5) which connects the fluid pump (4) and the fluid injector (8), wherein coolant circulates through a closed cooling circuit (8), and the injection fluid to be cooled, and the coolant to be circulated, flow through the heat exchanger (10) in such a way that a heat transfer takes place between the fluid flow and the coolant.

## Revendications

1. Banc d'essai (1) pour tester une pompe à fluide (4) et/ou un injecteur de fluide (8), comprenant :
un dispositif de réception de pompe à fluide (2) qui est réalisé pour recevoir une pompe à fluide (4) ;
un dispositif de réception d'injecteur de fluide (6) qui est réalisé pour recevoir un injecteur de fluide (8) ;
une conduite de fluide (5) qui relie le dispositif de réception de pompe à fluide (2) hydrauliquement au dispositif de réception d'injecteur de fluide (6) et qui permet, pendant le fonctionnement, un écoulement de fluide d'un fluide d'injection depuis la pompe à fluide (4) jusqu'à l'injecteur de fluide (8) ;
un circuit de refroidissement fermé (9) à travers lequel circule un agent réfrigérant pendant le fonctionnement ; et
un premier échangeur de chaleur (10) qui est réalisé et disposé dans la conduite de fluide (5) de telle sorte qu'il soit parcouru par l'écoulement de fluide du fluide d'injection et par l'agent réfrigérant pendant le fonctionnement de telle sorte qu'un transfert thermique se produise entre le fluide et l'agent réfrigérant.

2. Banc d'essai (1) selon la revendication 1, dans lequel, dans le circuit de refroidissement (9) est prévu un deuxième échangeur de chaleur (12) pour évacuer la chaleur hors de l'agent réfrigérant.

3. Banc d'essai (1) selon la revendication 1 ou 2, dans lequel l'agent réfrigérant est liquide et contient notamment de l'eau.

4. Banc d'essai (1) selon la revendication 3, dans lequel le circuit de refroidissement (9) est muni d'un refroidisseur d'eau.

5. Banc d'essai (1) selon l'une quelconque des revendications précédentes, présentant en outre au moins un capteur de température de fluide (14) qui est réalisé pour mesurer la température de l'écoulement de fluide.

6. Banc d'essai (1) selon la revendication 5, dans lequel au moins un capteur de température de fluide (14) est disposé en amont et/ou en aval du premier échangeur de chaleur (10).

7. Banc d'essai (1) selon l'une quelconque des revendications précédentes, présentant en outre au moins un capteur de température d'agent réfrigérant (16) qui est réalisé pour mesurer la température de l'agent réfrigérant dans le circuit de refroidissement (9).

8. Banc d'essai (1) selon l'une quelconque des revendications précédentes, comprenant une soupape d'agent réfrigérant (18) qui est disposée et réalisée dans le circuit de refroidissement (9) de manière à réguler l'écoulement d'agent réfrigérant dans le circuit de refroidissement (9).

9. Banc d'essai (1) selon la revendication 8, comprenant une commande (20) qui est connectée à la soupape d'agent réfrigérant (18) et réalisée de manière à réguler l'écoulement d'agent réfrigérant dans le circuit de refroidissement (9) par commande de la soupape d'agent réfrigérant (18).

10. Procédé de refroidissement d'un fluide d'injection dans un banc d'essai (1) pour une pompe à fluide (4) et/ou un injecteur de fluide (8) comprenant un échangeur de chaleur (10) dans une conduite fluidique (5), qui relie la pompe à fluide (4) et l'injecteur de fluide (8), de l'agent réfrigérant circulant à travers un circuit de refroidissement fermé (8) et le fluide d'injection à refroidir et l'agent réfrigérant circulant s'écoulant à travers l'échangeur de chaleur (10) de telle sorte qu'un transfert thermique ait lieu entre l'écoulement de fluide et l'agent réfrigérant.
